# EUROPEAN PATENT APPLICATION

(11) **EP 1 829 821 A1**
(43) Date of publication of application: **05.09.2007**
(21) Application number: 07425106.7
(22) Date of filing: 28.02.2007
(51) Int. Cl.: C01B 3/32, C01B 3/38, C01B 3/44, C01B 3/50

(54) **Membrane process for hydrogen production from reforming of organic products, such as hydrocarbons or alcohols**

(30) Priority: 01.03.2006 IT RM20060102
(71) Applicant: Enea-Ente Per Le Nuove Tecnologie, L'Energia e L'Ambiente, 00196 Rome (IT); Consiglio Nazionale delle Ricerche, 00185 Roma (IT); Societa' Italiana Acetile e Derivati S.I.A.D. in abbreviated form SIAD S.p.A., 24126 Bergamo (IT)
(72) Inventor: Tosti, Silvano, 00044 Frascati (RM) (IT); Basile, Angelo, 87030 Rende (CS) (IT); Lecci, Domenico, 00040 Rocca Priora (RM) (IT); Rizzello, Claudio, 00198 Roma (IT)
(74) Representative: Banchetti, Marina

(57) **Abstract**

The invention concerns a two-stage process enabling the production of ultrapure hydrogen starting from hydrocarbons or other suitable products and steam, wherein the steam reforming process is carried out in a conventional catalytic reactor and the mixture thereby obtained then undergoes a water gas shift reaction in a membrane reactor which also provides, at the same time, to the separation by selective permeation of the hydrogen produced in both stages. The procedure enables to optimise reaction yields and costs with respect to a process in which a single membrane reformer is used both for the reforming reaction and for separating the hydrogen produced.

## Description

The present invention concerns a membrane process for hydrogen production from the reforming of organic products, such as hydrocarbons or alcohols. More specifically, the invention concerns a two-stage process enabling the production of ultrapure hydrogen from hydrocarbons or other suitable products and steam, in which the reforming operation with steam is carried out in a conventional catalytic reactor and the mixture thereby obtained then undergoes a reforming reaction with water gas (water gas shift) inside a membrane reformer, which also simultaneously carries out separation by selective permeation of the hydrogen produced in both stages.

As is known, the main processes used for producing hydrogen on an industrial scale start from hydrocarbon type raw materials that are suitably desulphurised and carry out their reforming process with steam and/or oxygen in order to obtain flows rich in hydrogen and carbon oxides, possibly together with excess water and various reaction by-products. In particular, the most common processes belong to the following three categories:
■ Hydrocarbon reforming with steam;
■ Partial oxidation of hydrocarbons with oxygen;
■ Mixed oxidation with oxygen and steam.

If, for exemplificative purposes, a generic hydrocarbon molecule, CₘHₙ, is considered, the main reactions taking place in the reforming process using steam, generally referred to as "steam reforming", are the following:

CₘHₙ + m H₂O → m CO + (m + n/2) H₂ (1)

CO + H₂O → CO₂ + H₂ (2)

While the main reactions taking place in the partial oxidation process are the following:

CₘHₙ + m/2 O₂ → m CO + n/2 H₂ (3)

CO + H₂O → CO₂ + H₂ (2)

Reaction (1), which more properly represents steam reforming, is endothermic, and thus requires energy supply, while reaction (3), of partial oxidation, is exothermic and, as such, poses the problem of disposal and use of the heat produced. For this reason, a possible solution adopted is that of carrying out steam reforming (1) together with the partial oxidation reaction (3), in approximately autothermic conditions ("mixed" oxidation or self-sustained reforming).

In other applications, such as in the production of hydrogen for feeding fuel cells, the necessary heat and steam can be supplied directly by the cells themselves by recycling and inputting the steam produced by the redox reactions taking place in them.

The second fundamental reaction of both the aforesaid processes consists of a moderately exothermic reaction with which carbon monoxide, combining with further steam, turns into carbon dioxide thereby producing further hydrogen. This reaction, known as "water gas shift" (WGS), allows maximising hydrogen yields and minimising the presence of carbon monoxide in the gaseous products of the hydrocarbon reforming and partial oxidation processes.

The aforesaid processes can generally be applied to hydrocarbon feeds composed of single compounds (methane, butane) or mixed compounds (virgin naphtha, light distillates of petroleum), or even composed of other organic products, preferably with a high tenor of hydrogen, such as the lower alcohols. In practice, the most suitable products for hydrogen production are methane, methanol and ethanol, due to their high hydrogen content (low C/H ratio).

The steam reforming of hydrocarbons is the main source of hydrogen for industrial purposes. In particular, steam reforming with methane is a highly developed and widespread process whose production satisfies about 48% of the world demand for hydrogen. This system envisages the reaction of methane and steam in the presence of catalysts, such as nickel-based catalysts supported on alumina (Ni/Al₂O₃). In the conventional processes, the feed is desulphurised before being conveyed to the reforming reactor and is then fed with steam into the reactor, which is usually of the tube-sheath fixed-bed type, whose pipes are packed with the catalyst. The operating temperatures used range between 750 and 1100°C and the pressures range between 10 and 40 bar, with a water-methane ratio of 3:4 in order to avoid high carbon deposits.

The first stage of the process concerns decomposing methane into hydrogen and carbon monoxide, along the lines of reaction (1), while the second stage envisages the WGS reaction (2) in which carbon monoxide and steam produce carbon dioxide and hydrogen. In view of the already noted fact that the first stage of the process is endothermic, the steam reforming reactor is placed within a shell, which is typically a furnace, where part of the methane burns in order to supply the heat necessary for the reaction.

The main chemical reaction in the first stage of the process is as follows:

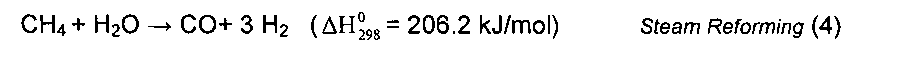

On exiting the reformer, the stream cedes part of its heat to a recuperator and then passes to the converter, where the carbon monoxide reacts with steam to turn into carbon dioxide. The WGS normally takes place at about 400°C on iron oxide-based catalysts:

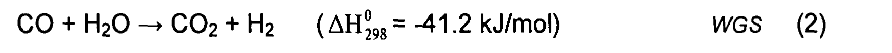

On exiting the converter, the carbon dioxide is removed, normally via one of the processes known as decarbonation (acid gases cleaning), and a gas mainly composed of hydrogen is obtained, which must still undergo further purification treatments, mainly in order to remove non-reacted carbon monoxide residues.

The overall reaction is thus as follows:

CH₄ + 2 H₂O → CO₂ +4 H₂ (5)

and the overall process yield is around 50-70%.

In order to produce hydrogen through steam reforming it is possible to use, instead of methane, methanol or hydrocarbons from biomasses (biogas and bioethanol). Biogas may be obtained by the gasification of biomasses, while ethanol usually derives from fermentation processes. Methanol is particularly useful in the production of hydrogen for fuel cells to be used in motor vehicles, since its reforming can take place at about 300°C - a temperature which is compatible with the normal running conditions of automobiles.

In hydrogen production processes of the aforesaid conventional types, a considerable improvement in reaction yield may be obtained by using membrane separators, downstream of the process, that enable the selective permeation of just hydrogen (and of its isotopes), by removing the hydrogen produced from the reaction environment and thus shifting the reaction equilibrium rightwards. It is known, in particular, that palladium and palladium-silver alloys have a particularly high solubility potential for hydrogen. In particular, at room temperature, palladium can absorb a volume of hydrogen equal to hundreds of times its own weight, with the hydrogen atoms taking up interstitial positions in the crystalline lattice of the metal. This property of palladium is also accompanied by a high hydrogen diffusion coefficient, which makes this metal and its alloys particularly suitable for use in a membrane for hydrogen separation and purification. In particular, the addition of silver (20-25% weight) in commercial permeators reduces the hydrogen weakening effect on pure palladium thereby increasing the operating life of the membrane itself. In effect, dense membranes (non-porous or faultless) of palladium (or of its alloys, or also of other metals having similar properties) can only be permeated by hydrogen or by its isotopes and thus are able to separate them selectively from gaseous mixtures.

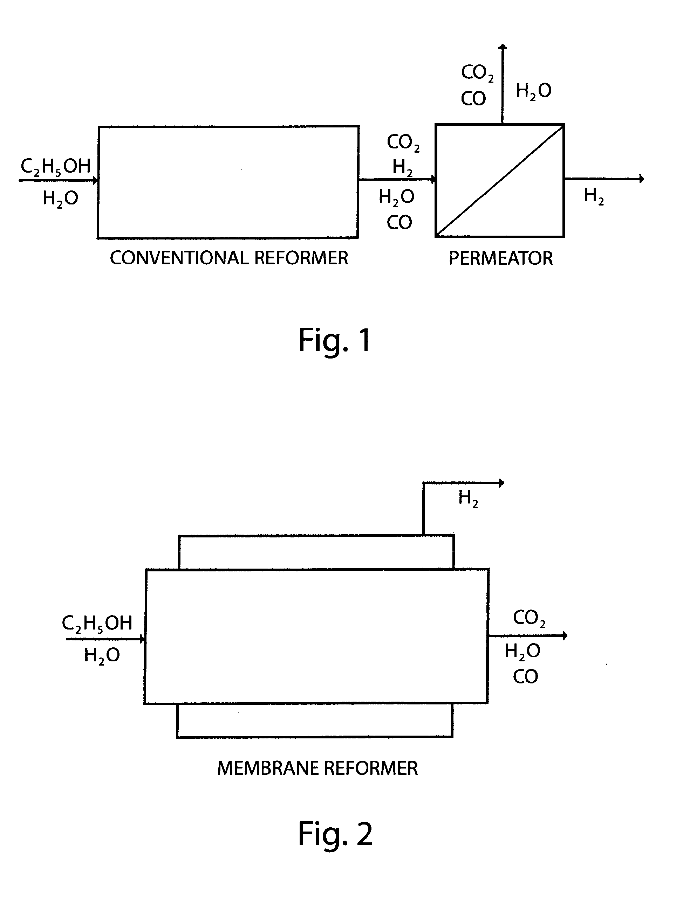

With reference to the steam reforming reaction of ethanol, for example, Figure 1 of the attached drawings shows a simplified scheme of a system composed of a conventional reformer and a permeator. The reformer is fed by a water/ethanol mixture with excess water, as already mentioned, and the outgoing stream is made up of carbon dioxide, hydrogen, carbon monoxide and water, as well as a small amount of by-products not indicated in the diagram. This stream is then sent to a membrane permeator, where hydrogen is separated from the other gases.

Another possibility which has been widely studied in the field consists of devising integrated systems for ultrapure hydrogen production by means of hydrocarbon dehydrogenation reactions (such as with reforming and/or partial oxidation) in which the reaction itself of hydrocarbon steam reforming and possibly of partial oxidation is carried out inside a combined reactor/permeator having tubular walls consisting of hydrogen selective membranes. These reactors, known as membrane reactors, have been studied since the late 1960s and have turned out to be particularly useful for carrying out reversible reactions that are limited by the thermodynamic equilibrium. As already noted, since in this case the reaction products can be removed from the reaction environment via the membrane, the reactions can, in theory, be made to continue up to achieving 100% conversion or, in any case, beyond the thermodynamic equilibrium values.

A diagram illustrating the application of a membrane reformer for hydrogen production by means of hydrocarbon reforming, applied to the case of ethanol, is shown for exemplificative purposes in Figure 2 of the attached drawings. In this case, the device works both for ethanol reforming and for separating hydrogen from the reaction environment. The hydrogen produced by the reforming reaction permeates the membrane and is then sucked out, or it can be removed from the reactor shell by washing in condensing steam or in an inert gas, or by mere over-pressure by means of appropriate gradients of transmembrane pressure.

One of the first examples of the use of a membrane reactor for the production of ultrapure hydrogen from hydrocarbons and steam is described in US 5525322 in the name of Willms (assignees: The Regents of the University of California). The patent proposes the use of a membrane reactor consisting of a thin-walled Pd/Ag alloy permeator tube placed coaxially inside a tubular shell, associated with a nickel catalyst bed placed inside the tubular shell itself, for carrying out steam reforming reactions associated with WGS within the same reaction environment. Owing to the considerable elongation/contraction of the palladium tubes during operation, the document envisages the creation of Pd/Ag permeator tubes attached to only one end of the shell in a "finger-like" manner.

As a further example, the international patent application WO 99/61368 of Birdsell & Willms (assignees: The Regents of the University of California) describes hydrogen generation from the reforming of organic molecules by means of a palladium membrane reactor, where just a single operation (steam reforming, water gas shift and selective permeation) is required to produce hydrogen starting from fuels such as methane, octane, methanol, ethanol or even gasoline. The membrane reactor structure is the same as the one described in the previous document.

Membrane reformers for the production of ultrapure hydrogen have also been studied and realised in the ENEA laboratories of Frascati (Italy) and in the CNR ones of Rende (Italy), both in a single-tube version for laboratory applications (A. Basile, S. Tosti, "Portable interchangeable membrane device for the evaluation of permeation and gaseous phase reaction processes", Italian patent application No. RM2005 U000107, of 8 August 2005) and in a shell and tube version for producing greater quantities of hydrogen (S. Tosti, A. Basile, L. Bettinali, D. Lecci, C. Rizzello, "Membrane shell and tube device for the production of ultrapure hydrogen", Italian patent application No. RM2005 A000399, of 26 July 2005). These membrane reactors use thin-walled (50 µm thick) palladium-silver alloy permeator tubes produced by means of a cold lamination procedure of metal foils and subsequent diffusion welding. This manufacturing technique had previously been developed by the same organisation (patent application EP 1184125 in the name of ENEA, inventors: S. Tosti, L. Bettinali, D. Lecci, F. Marini and V. Violante, and entitled: Method of bonding thin foils made of metal alloys selectively permeable to hydrogen, particularly providing membrane devices, and apparatus for carrying out the same).

Various works have been published on the application of membrane reactors for the production of ultrapure hydrogen by steam reforming and/or partial oxidation of hydrocarbons and similar combustible products, such as the studies on the oxidative steam reforming of methanol (A. Basile et al., Catalysis Today, 104 (2005), 251-259) and steam reforming of methane (F. Gallucci et al., Ind. Eng. Chem. Res., 43 (2004), 928-933), each time using different catalysts and operating conditions, and with different degrees of conversion of the starting product and of hydrogen yield. Studies in this field have also experimentally examined steam reforming of ethanol (S. Cavallaro et al., Applied Catalysis, A: General, 249 (2003) 119-128).

In general, with respect to conventional reactors, membrane reformers have the advantage of achieving higher reaction yields by using less process apparatus, since just a single device can carry out both the reaction and separation operations. More specifically, as noted, membrane reformers using palladium alloy membranes have been proposed for hosting dehydrogenation reactions (e.g. reforming and/or partial oxidation of hydrocarbons). They can produce ultrapure hydrogen without requiring further separation processes and, in addition, with other conditions being equal, the complete selectivity of the membrane allows obtaining of greater reaction yields with respect to conventional reactors.

In the studies carried out within the frame of the present invention, examining the application of a shell and tube membrane reformer like the one described in the aforesaid Italian patent application RM2005 A000399 for the production of hydrogen from ethanol, it was found that carrying out a process in which the reforming operation takes place completely inside such a reformer requires a particularly high number of palladium alloy permeator tubes. Moreover, for reforming from ethanol, these tubes must operate at a high temperature (650°C). These operating conditions are particularly onerous since they require suitable jointing and sealing systems of the palladium tubes for the reactor module in order to be able to operate at such a high temperature. At present, instead, the Pd/Ag tubes are joined to the steel sections of the module by brazing, enabling a maximum operating condition of 450°C.

To overcome these inconveniences, the present invention proposes to divide the steam reforming and/or partial oxidation process for producing ultrapure hydrogen according to the prior art into two stages, of which only the second, including the final water gas shift (WGS) and hydrogen separation, is carried out in a membrane reformer, and namely a membrane reformer of the previously described types, while the first stage, characterised by stricter conditions, is carried out in a conventional type reformer. More specifically, the proposed process uses two reactors:
■ a first conventional reactor, such as of the fixed-bed type packed with catalyst, for reforming, working at the temperature required for the reforming of the particular product concerned.
■ a second membrane reformer, preferably consisting of a bundle of palladium alloy permeator tubes, where the WGS reaction takes place at lower temperatures: this reformer provides for both the conversion of steam and carbon oxide into hydrogen and carbon dioxide, and for the separation of the hydrogen produced in both reactors.

It must be noted that the second reformer of the process proposed according to the present invention works in a different way compared to the membrane reformers hitherto considered: although integrating the operative procedures of a membrane reformer and separator, it only achieves the final part of a steam reforming process, by producing only the hydrogen from the water gas shift, while it separates all the hydrogen produced, including the one coming from the first reformer.

Hence, the present invention specifically provides is a process for hydrogen production by reforming and/or partial oxidising of organic products, comprising the following fundamental operations:
a) steam reforming and/or partial oxidation, carried out in a catalytic reactor, of material composed of the said organic products and steam in order to provide a product mixture enriched of hydrogen and carbon monoxide;
b) reforming of the product mixture obtained in operation a) and still containing steam, into a carbon dioxide enriched product mixture further enriched with hydrogen, and separating the said hydrogen from the reaction environment, all of which is carried out in a membrane reactor.

More specifically, operation a) is a steam reforming and/or partial oxidation reaction and can be carried out in a fixed-bed or fluidised-bed reactor with packing composed of a suitable catalyst for steam reforming. The said steam reforming catalyst is preferably chosen from among the following: nickel supported on alumina (Ni/Al₂O₃), ruthenium, rhodium or copper, all supported on alumina (Ru/Al₂O₃, Rh/Al₂O₃, Cu/Al₂O₃).

As noted, the said operation b) is specifically a WGS reaction with the simultaneous separation of hydrogen through a membrane that is selectively permeable to hydrogen. Preferably, in accordance with the prior art, the said selective membrane is a dense metallic membrane composed of a palladium alloy, and preferably Pd/Ag.

Compared to a similar process, but wholly carried out inside a membrane reformer, the process proposed according to the present invention has the following main advantages:
- reducing the number of palladium alloy permeator tubes used, with a significant decrease in costs, size and weight;
- using the membrane reformer (in which the WGS reaction takes place) in less onerous operating conditions (lower temperature) compared to some dehydrogenation reactions (e.g. ethanol reforming and partial oxidation).

In general, the membrane that is selectively permeable to hydrogen can be a dense metallic membrane, a porous membrane not completely selective to hydrogen, such as of ceramic material, or a composite membrane, with a selective metallic film mounted on a porous layer, such as ceramic material. In fact, although the proposed process in the membrane reformer preferably uses thick metallic permeators completely selective to hydrogen, the main advantages of its application (less apparatus, smaller size, lower costs and higher reaction yields) are present, albeit in a smaller amount, also when porous membranes with a non-infinite selectivity to hydrogen are used.

The membrane reformer used in the process according to the present invention includes a packing composed of a suitable catalyst for WGS reactions, and particularly a catalyst based on Fe, Cr or Ni, or their oxides, such as iron oxide or mixed iron-chrome oxides.

As already noted, the process according to the present invention can generally be applied to any organic product, or mixture of organic products, that can suitably undergo steam reforming, but can particularly and advantageously be used in hydrogen production from feeds such as methane, ethane, methanol and ethanol.

Preferably, the membrane reformer used in the process according to the present invention is a reactor of the shell and tube type, such as the ones already studied by the authors themselves, with the tubes made up of membranes selectively permeable to hydrogen. In this case, the water gas shift catalyst is preferably placed inside the tubes.

In view of the fact that the steam reforming and/or partial oxidation reaction carried out in the catalytic reformer is characterised by higher temperatures than those at which the subsequent water gas conversion phase and selective permeation through the membrane is carried out, the procedure according to the present invention envisages another operation after the aforesaid operation a) of steam reforming, and namely an operation a1) of heat recovery, in which the mixture of products obtained from operation a) is cooled in a heat exchanger.

According to a specific embodiment of the present invention, the hydrogen produced from the said operation b) of water gas conversion and selective permeation is removed from the shell of the said membrane reformer by washing with an inert gas. In procedures in which hydrogen production is coupled with energy production through fuel cells, the hydrogen carried in the said inert gas is fed to the anode of a polymer type fuel cell.

Other possible systems for removing hydrogen from the membrane reformer shell make use of vacuum or overpressure, of (condensing) steam or of a mixed system of inert gas and steam: the latter system is to be preferred in the case where the hydrogen is destined to feed polymer fuel cells since these cells perform better when fed by wet hydrogen.

More specifically, the process is proposed for producing ultrapure hydrogen from the steam reforming of ethanol - the hydrogen produced being used, in particular, for feeding a 500 W polymer fuel cell.

With reference to the possible application of the proposed process to hydrogen production for feeding fuel cells for mobile applications (hydrogen engine vehicles) or fixed ones (energy production), the modularity of the proposed process makes it possible for it to be implemented for small-medium sized power levels (3-30 kW). On the other hand, the use of membranes that are not completely selective but of greater permeability makes this process applicable also in larger scale systems (100-500 kW), envisaging fuel cells (e.g. fused carbonate ones) that can be fed also by non-pure hydrogen.

The specific features of the present invention, as well as its advantages and the relevant operative procedures, will be more evident with reference to the detailed description presented merely for exemplificative purposes below, along with the results of the experimentations carried out on it and a comparison with the prior art. The present invention is also illustrated in the attached drawings, wherein:
Figure 1, already commented upon, shows a simplified scheme of a process of the prior art for hydrogen production from ethanol, by means of a conventional reformer and permeator selective to hydrogen;
Figure 2, already commented on, shows a simplified scheme of a process of the prior art for hydrogen production from ethanol, by means of a membrane reformer for the reforming operation and for separating hydrogen from the reaction products;
Figure 3 shows a simplified scheme of the process according to the present invention for the production of ultrapure hydrogen starting from reforming and/or partial oxidation operations of organic products;
Figure 4 is a diagram showing the experimental results of a process for hydrogen production by steam reforming of ethanol in a reactor according to the prior art, and namely the trend of ethanol conversion and selectivity of the various products as a function of their spatial velocity;
Figure 5 is a diagram showing other experimental results of the process according to Figure 4, and namely the quantity of hydrogen produced per mole of starting ethanol, according to spatial velocity;
Figure 6 is a diagram showing the trend of molar flows of the various species present inside the permeator tubes of a membrane reformer/permeator that carries out the second stage of the process according to the present invention; and
Figure 7 shows a simplified scheme of the process according to the present invention, applied to hydrogen production for feeding polymer type fuel cells.

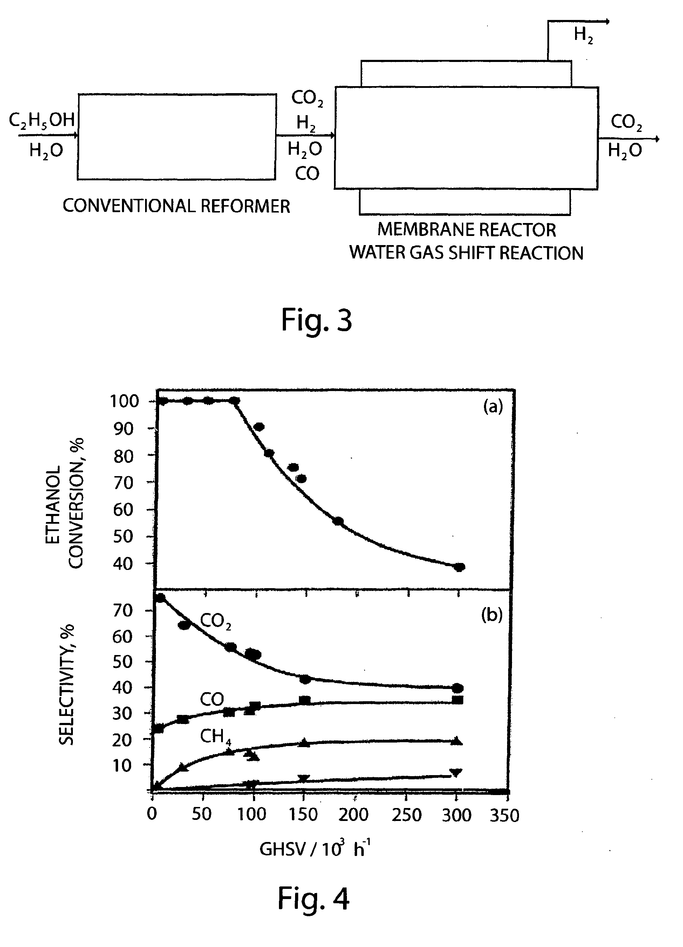

Figures 1 and 2, which represent the two prior art solutions for ultrapure hydrogen production by steam reforming and/or partial oxidation from organic products (represented here by ethanol for exemplificative purposes), have already been commented upon in the introduction. In the solution according to the present invention, illustrated schematically in Figure 3, the reforming reaction is carried out in a conventional catalytic reactor and the WGS reaction is carried out in a membrane reformer which also acts as a selective separator for all the hydrogen produced, both in this phase and in the previous one. As already noted, the membrane reformer is composed of one or more permeator tubes, preferably made of dense metallic material, and better of palladium-silver alloy, containing a specific catalyst for the WGS reaction. It is fed by a gaseous flow exiting the reformer and envisages two processes:
■ conversion of the carbon oxide and water into hydrogen and carbon dioxide;
■ permeation of hydrogen coming from the reformer and of the hydrogen produced in the membrane reformer itself through the palladium alloy permeators.

The illustrated process, as will be detailed below, enables optimising the reaction yields and costs with respect to a process in which just one membrane reformer is used.

A specific embodiment of the present invention is described below for mere exemplificative purposes, along with the results of the experimentations carried out on it.

### EXAMPLE

To assess the performance of the procedure according to the present invention, compared to the method described by the prior art, in which the whole process of steam reforming and selective separation is carried out within a single membrane reformer, it was chosen to study the reforming reaction of ethanol:

C₂H₅OH + 3H₂O ⇔ 2CO₂ + 6H₂ (6)

Parallel to the ethanol reforming reaction there are numerous secondary reactions depending on the operating conditions and on the type of catalyst used. In general, one can indicate:

C₂H₅OH ⇔ C₂H₄ + H₂O (7)

C₂H₅OH + H₂O ⇔ 4H₂ + 2CO (8)

2C₂H₅OH ⇔ 3CH₄ + CO₂ (9)

CH₄ + H₂O ⇔ CO + 3H₂ (10)

and the water gas shift reaction:

CO + H₂O ⇔ H₂ + CO₂ (2)

Reaction (6) is on the whole endothermic: the type of catalyst used affects the operating temperature, the conversion and selectivity of the products. Studies in the literature (D.K. Liguras et al., Applied Catalysis, 43, (2003), 345-354) carried out in the range 600-800°C show that at 800°C the ethanol conversion is at its peak, the selectivity of hydrogen reaches 95% and virtually only methane is produced as a by-product. Moreover, the selectivity to hydrogen increases also by excess water in the feed of the reagents: the literature reports a water/ethanol feed ratio ranging from 3:1 to 8:1 for the various catalysts (D.K. Liguras, op. cit., V. Fierro et al., Catalysis Today, 75, (2002), 141-144; D. Srinivas et al., Applied Catalysis., 246, (2003), 323-334).

It must be stressed that, besides conversion and selectivity, the temperature also affects the formation of coke on the catalyst and the thermal performance of the system.

To properly scale the first reactor of the process according to the present invention (conventional reformer), reference was made to a study in the literature (S. Cavallaro et al., (2003), op. cit.) on the carrying out of steam reforming from ethanol. This study used a rhodium-based catalyst (Rh/Al₂O₃) operating at 650°C and at atmospheric pressure, with a water/ethanol feed ratio of 8.4:1 and a spatial velocity of 5000 h⁻¹. The catalyst mass is 0.001-0.06 g, placed inside a fixed bed of a membrane micro-reactor of 4 mm diameter with a bed length of 1-2 cm.

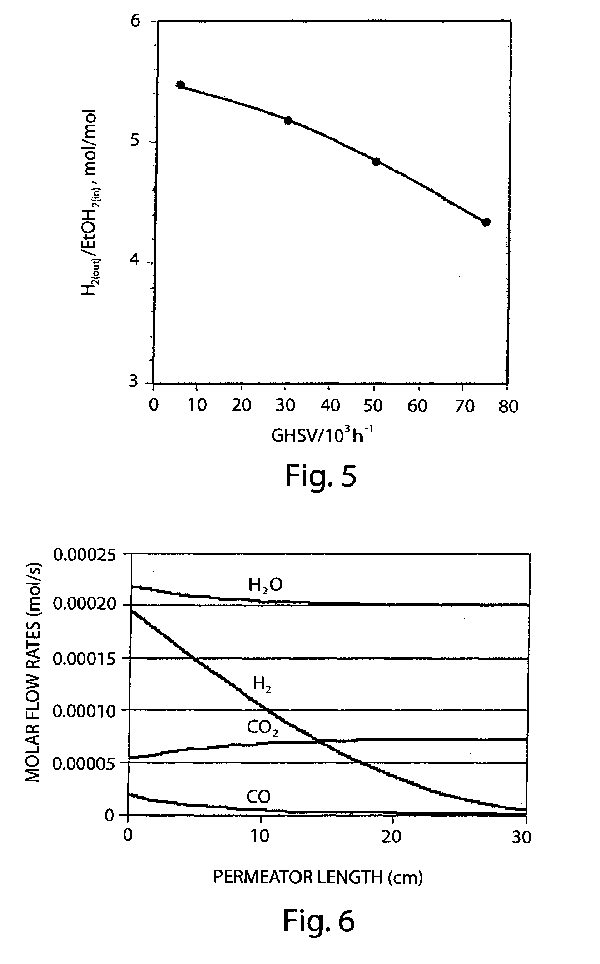

In these conditions, as shown in Figure 4, an almost complete conversion of ethanol is obtained with a good selectivity for carbon dioxide (CO₂, 75%) and carbon monoxide (CO, 23%), and with small quantities of methane (CH₄) and other substances (altogether, less than 2% in volume) present among the reaction products. It is evident that the conversion of ethanol depends on the spatial velocity (GHSV, h⁻¹): operating at low velocities (such as at around 5000-10000 h⁻¹), the formation of by-products is negligible. The quantity of hydrogen produced in relation to the initial moles of ethanol - still as a function of spatial velocity - is shown in Figure 5. As can be seen, at low spatial velocities, around 5.5 moles of hydrogen is produced per mole of ethanol, against a stoichiometric value of 6 of the complete reaction (6).

The stream exiting the reformer also contains excess water used in the feed. According to what is considered within the present invention, this water can be used in order to convert the carbon monoxide into carbon dioxide and hydrogen according to the aforesaid WGS reaction (reaction 2).

Therefore, in the subsequent stage of the process studied, a membrane reformer is used in which the WGS reaction takes place: the separation of the hydrogen present in the feed flow and also of the hydrogen produced in the conventional reformer, according to the aforesaid reaction scheme (6-10), and, partly (2), also of the hydrogen produced in the membrane reformer itself according to reaction (2), enabling the conversion of all the CO into CO₂, all takes place within the same device.

In this way, the ethanol reforming reaction is carried out at a higher temperature, with almost complete conversion, in a conventional reactor without using any membranes. On the other hand, a membrane device is used in the second stage of the process for carrying out the WGS reaction operating at a lower temperature (350°C), compatibly with the operating conditions of the already developed Pd/Ag-based permeators.

The process studied was applied to the dimensioning of a system able to produce an ultrapure hydrogen stream of 14.6 mol/h (about 6 l/min) that can feed a 500 W polymer type fuel cell. The reformer is composed of a conventional fixed-bed reactor operating at 650°C and 200 kPa with a Rh-based catalyst. The WGS reaction takes place prevalently in the membrane reformer, which is composed of an already studied shell and tube device containing 19 Pd/Ag alloy tubes of 15 mm diameter, 300 mm length and with a wall thickness of 50 µm. It operates at 350°C and 200 kPa.

In the membrane reformer under study, the permeated hydrogen is removed by washing with an inert gas: a nitrogen flow of 20 mol/h operates counter-flow at atmospheric pressure in the reactor shell in order to extract the hydrogen produced.

Figure 6 shows the trend of the molar flows of the various gaseous species within each of the permeator tubes used in the membrane reformer according to the present invention. It is noted that all the carbon monoxide reacts with water and that practically all the hydrogen (the hydrogen present in the feed plus the hydrogen produced in the WGS reaction) permeates through the membrane and is recovered by the washing nitrogen flow.

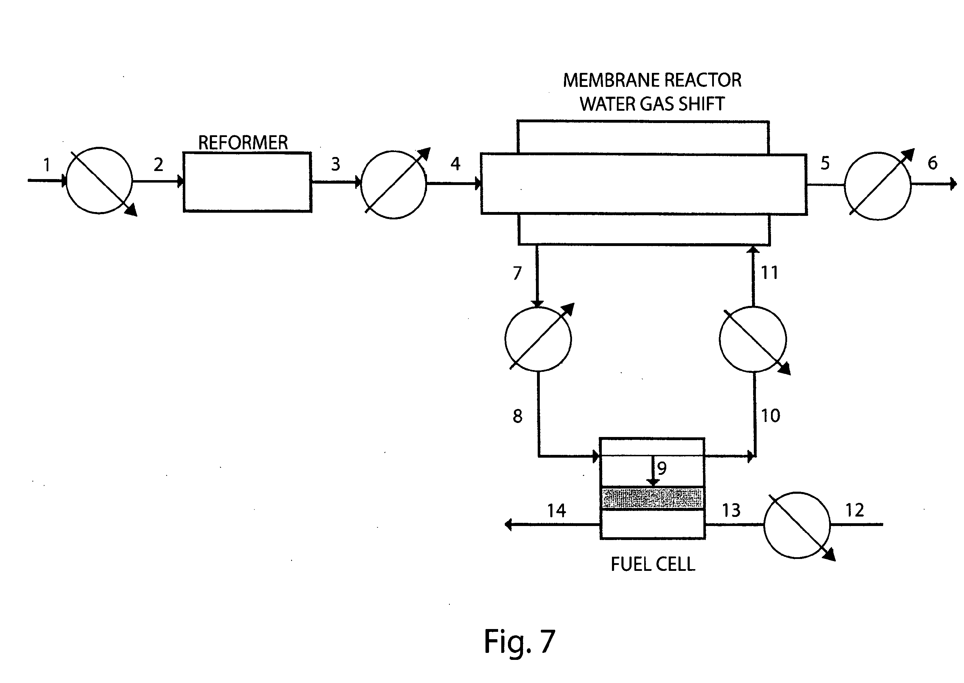

The application of the process according to the present invention to energy production through fuel cells is schematically illustrated in Figure 7: as it may be seen, the nitrogen flow which extracts the hydrogen produced by the membrane reformer shell is recycled through the anode of a polymer type fuel cell.

Table 1 below reports the physical state together with the pressure and temperature values for each stream indicated with reference numbers in Figure 7, as well as the matter balances relative to the entire process.

**TABLE 1**

| Characteristics of the streams and matter balances | | | | | | | | | | | | | | |
|---|---|---|---|---|---|---|---|---|---|---|---|---|---|---|
| Srteam | **1** | **2** | **3** | **4** | **5** | **6** | **7** | **8** | **9** | **10** | **11** | **12** | **13** | **14** |
| State | L | G | G | G | G | G | G | G | G | G | G | G | G | G |
| T, K | 293,15 | 923,15 | 923,15 | 623,15 | 623,15 | 293,15 | 623,15 | 373,15 | 373,15 | 373,15 | 623,15 | 293,15 | 373,15 | 373,15 |
| P, kPa | | 200,00 | | | 200,00 | 200,00 | 100,00 | 100,00 | | | | | | |

| Flow rates (mol/h) of each stream | | | | | | | | | | | | | | |
|---|---|---|---|---|---|---|---|---|---|---|---|---|---|---|
| H₂O | 21,00 | 21,00 | 15,06 | 15,06 | 13,70 | 13,70 | | | | | | | | 14,61 |
| N₂ | | | | | | | 20,00 | 20,00 | | 20,00 | 20,00 | 31,17 | 31,17 | 31,17 |
| O₂ | | | | | | | | | | | | 8,04 | 8,04 | 0,73 |
| H₂ | | | 13,25 | 13,25 | | | 14,61 | 14,61 | 14,61 | | | | | |
| CO | | | 1,37 | 1,37 | 0,01 | 0,01 | | | | | | | | |
| CO₂ | | | 3,50 | 3,50 | 4,86 | 4,86 | | | | | | | | |
| C₂H₅OH | 2,50 | 2,50 | 0,06 | 0,06 | 0,06 | 0,06 | | | | | | | | |

Thermal balances of the process under study were also carried out. The reforming reaction is strongly endothermic and heat must also be supplied in order to vaporise the water/ethanol mixture feeding the reformer. As already noted, heat can instead be recovered by the WGS reaction, which is moderately exothermic, and by cooling the flow feeding the membrane reactor and coming from the reformer (from 650 to 350°C). Further heat can be recovered from the gaseous flow released by the membrane reactor.

Bearing in mind the heat recoveries, it results that, when fully operational, about 200 thermal W (40% of the electric energy produced by the fuel cell) must be supplied to the system: in the simplest manner, this can be supplied by the combustion of an additional flow of ethanol.

In general, the studied application may be extended to all hydrocarbon reforming and/or partial oxidation processes used for hydrogen production in which conversion takes place of the carbon monoxide produced in the dehydrogenation phase by WGS reaction.

Moreover, owing to its characteristics of modularity and scalability at higher power levels, the proposed process can be easily integrated into other energy systems - both conventional ones (thermal plants for heat and/or electricity production) and alternative ones (such as thermal solar plants). Finally, the use of hydrocarbons from biomasses (bioethanol, biodiesel, etc.) in the reforming reaction, as well as integration with thermal solar plants broaden the field of potential applications to the production of clean energy.

The present invention has been disclosed with particular reference to some specific embodiments thereof, but it should be understood that modifications and changes may be made by the persons skilled in the art without departing from the scope of the invention as defined in the appended claims.

## Claims

1. A process for hydrogen production by reforming and/or partial oxidising of organic products, comprising the following fundamental operations:
a) steam reforming and/or partial oxidation, carried out in a catalytic reactor, of material composed of the said organic products and steam in order to provide a product mixture enriched of hydrogen and carbon monoxide;
b) reforming of the product mixture obtained in operation a) and still containing steam, into a carbon dioxide enriched product mixture further enriched with hydrogen, and separating the said hydrogen from the reaction environment, all of which is carried out in a membrane reactor.

2. A process according to claim 1, wherein the said operation a) is a steam reforming and/or partial oxidation reaction.

3. A process according to claim 2, wherein the said steam reforming and/or partial oxidation reaction is carried out in a fixed-bed reactor or fluidised-bed reactor, with a steam reforming catalyst packing.

4. A process according to claim 3, wherein the said steam reforming catalyst is chosen from among Ni/Al₂O₃, Ru/Al₂O₃, Rh/Al₂O₃, Cu/Al₂O₃.

5. A process according to any one of claims 1-4, wherein the said operation b) is a water gas shift reaction with simultaneous separation of hydrogen through a membrane that is selectively permeable to hydrogen.

6. A process according to claim 5, wherein the said membrane selectively permeable to hydrogen is a dense metallic membrane, a porous membrane not completely selective to hydrogen or a composite membrane, with a selective metallic film supported on a porous layer.

7. A process according to claim 6, wherein the said dense metallic membrane is composed of a Pd/Ag alloy.

8. A process according to any one of claims 5-7, wherein the said membrane reactor includes a water gas shift catalyst packing.

9. A process according to claim 8, wherein the said catalyst is based on Fe, Cr or Ni, or their oxides.

10. A process according to any one of claims 1-9, wherein the said organic products of the feed are chosen from among methane, ethane, methanol and ethanol.

11. A process according to any one of claims 8-10, wherein the said membrane reactor is a shell and tube type reactor, with the tubes made out by the said membranes selectively permeable to hydrogen and the said water gas shift catalyst is placed inside the tubes.

12. A process according to any one of claims 1-11, wherein after the said operation a) there is an operation a1) of heat recovery, wherein the mixture of products obtained from operation a) is cooled inside a heat exchanger.

13. A process according to claims 11 or 12, wherein the hydrogen produced in the said operation b) is removed from the shell of the said membrane reactor by pressure difference, by washing with an inert gas, by removing with condensing steam or by a mixed system of inert gas and steam.

14. A process according to claim 13, wherein the said hydrogen possibly carried in the said inert gas and/or in the said steam, is fed to the anode of a polymer type fuel cell.
